# EUROPEAN PATENT SPECIFICATION

(11) **EP 1 342 560 B1**
(45) Date of publication and mention of the grant of the patent: **09.07.2008**
(21) Application number: 03251299.8
(22) Date of filing: 04.03.2003
(51) Int. Cl.: B29D 11/00, B29C 33/44, B29C 71/00, B29C 39/36, B29C 41/42

(54) **Use of microwave energy to demold contact lenses**
Benutzung von Mikrowellenenergie zur Entformung von Kontakt-Linsen
Utilisation de l'énergie micro-onde pour le démoulage de lentilles de contact

(30) Priority: 04.03.2002 US 361534 P
(43) Date of publication of application: 10.09.2003
(60) Divisional application: 06076265.5
(73) Proprietor: Johnson & Johnson Vision Care, Inc., Jacksonville, FL 32256 (US)
(72) Inventor: Calvin, Olin, Jacksonville, Florida 32216 (US); Bowen, David, St. Augustine, Florida 32080 (US); Albrektson, Philip R., Jacksonville, Florida 32223 (US)
(74) Representative: Mercer, Christopher Paul

(56) References cited:
- EP-A- 0 806 286
- US-A- 5 417 557
- US-A- 6 143 210

## Description

The present invention relates generally to a method for using microwave energy to demold contact lenses.

The state of the art of manufacturing hydrogel soft contact lenses has progressed to automated molding systems and assembly lines in which each hydrogel soft contact lens is formed by sandwiching a monomer between front and back mold section halves. The monomer is polymerized to form a lens, which is then removed from the mold section halves, further treated and then packaged for consumer use.

In a typical prior art soft contact lens manufacturing process, metal inserts are used in an injection molding machine in an injection molding process to produce many thermoplastic injection molded front curve (FC) molds and back or base curve (BC) molds, each of which FC and BC molds is subsequently used only once to mold a single soft hydrogel contact lens. In this process, the FC mold is dosed with contact lens forming monomer, the BC mold is carefully placed upon the FC mold and the two mold halves pressed together, with excess monomer being expelled into the space outside the optical surfaces of the mold halves. The monomer is then polymerized to form a lens, which is then removed from the mold and further processed to yield the final soft hydrogel lens product.

US 5,417,557 describes an apparatus and method for removing a molded ophthalmic lens from between the mold portions in which it is produced. A source of intense electromagnetic radiation, preferably a carbon dioxide (CO₂) laser of about 80 Watts at a wavelength of 10.6 µm, is applied to at least one of the mold portions. The exposure of the mold portion to the laser is between one half and one second. Differential expansion of the heated mold polymer relative to the cooler polymer shifts one surface with respect to the other, and the shear force breaks the polymerized lens/polymer mold adhesion and assists in the separation of mold portions. The greater the temperature gradient between the surfaces of the mold portions, the greater the shearing force and the easier the mold portions separate. The heated back mold portion is promptly removed so that very little energy is transferred to the polymer lens, avoiding the possibility of thermal decomposition of the lens.

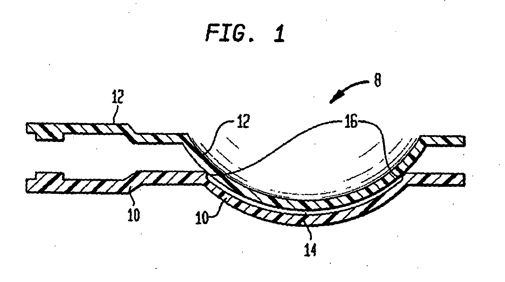

Figure 1 is a side elevational sectional view of a typical prior art mold assembly 8 which includes a front curve mold half 10 and a back curve mold half 12 which define a volume therebetween in which a soft contact lens 14 is molded.

The front mold half 10 defines a central curved section with an optical quality concave surface which has a circular circumferential well defined sharp edge 16 extending therearound. The sharp edge 16 is desirable to form a well defined and uniform plastic radius parting line (edge) for the subsequently molded soft contact lens. Similarly, the back curve half 12 defines a central curved section with an optical quality convex surface.

The FC and BC molds may be manufactured from any thermoplastic material which is capable of being injection molded and which provides the final cast lens with the required optical properties, with currently preferred materials for mold frames being polystyrene and polypropylene. To injection mold the FC and BC molds, injection metal tool inserts of the required configuration are typically machined and mounted in the injection molding machine. The injection molded FC and BC molds are close and reproducible inverse reproductions of the injection metal mold inserts, and the resultant molded contact lenses are close and reproducible reproductions of the metal mold inserts.

After the molding of a contact lens between the FC and BC mold halves, the FC and BC mold halves must be separated. Typically, during separation of the FC and BC mold halves, an excess HEMA ring, which is excess mold material surrounding the mold cavity, adheres to the FC mold which is designed to promote this adhesion, while the molded contact lens adheres to the BC mold.

For disassembly of the FC mold which retains the adhered HEMA ring from the BC mold which retains the molded contact fens, the prior art has used IR lamps as a heat source, and less than approximately 20% of the energy from the IR lamps is used to disassemble the product. This is disadvantageous because of the waste of energy, and moreover all of this energy must be subsequently removed by an expensive water cooling process and system which must be operated, monitored, and maintained to remove all of the IR added heat. The IR process is not precise, and many lenses are damaged during the disassembly and opening step.

### SUMMARY OF THE INVENTION

Accordingly, it is a primary object of the present invention to provide a method for using microwave energy to demold contact lenses. The object of the present invention is achieved by a process according to claim 1.

The present invention uses microwave energy to promote disassembly of the FC mold (or BC mold) with an adhered HEMA ring from the BC mold (or FC mold) with an adhered contact lens.

The present invention provides:
three advantages for demolding 1) superior energy containment and direction, resulting in a reduced energy requirement, 2) simplification of the disassembly equipment, and 3) improved product yield;

The present invention results in a substantial simplification of the disassembly, equipment which is a significant factor. The microwave equipment consists of a power supply, a microwave generator, a microwave waveguide, and possibly a wave valve. Waveguides can be produced from sheet metal so they are low cost (the expense is in the design) and waveguides are virtually 100% efficient at containing and directing microwaves and are not subject to accelerated corrosion.

The transfer of microwave energy depends on coupling of the electromagnetic field with a polar group within the material to be heated. Hydroxyl groups are among those subject to this type of heating. Heating of the solvent and solutes significantly increases diffusion of materials from the lenses. The transfer of microwave energy to hydroxyl groups (with standard microwaves) is very efficient, and also is advantageously delivered at the point of usage. Thus, hydroxyl-containing molecules like Darocur 1173 should be extracted faster by microwave application.

### BRIEF DESCRIPTION OF THE DRAWINGS

The foregoing objects and advantages of the present invention for the use of microwave energy to demold contact lenses may be more readily understood by one skilled in the art with reference being had to the following detailed description of several embodiments thereof, taken in conjunction with the accompanying drawings wherein like elements are designated by identical reference numerals throughout the several views, and in which:
Figure 1 is a side elevational sectional view of a typical prior art mold assembly which includes a front curve mold half and a back curve mold half which define a volume therebetween in which a soft contact lens is molded.
Figure 2 illustrates a contact lens/mold assembly of a front curve mold and a base curve mold after a hydrogel soft contact lens has been molded therein supported by a vacuum operated conveyance device which has positioned the lens/mold assembly in a microwave heating and processing demolding station.
Figure 3 shows a process step and position in which the cured lens/back curve mold are demolded or disassembled from the front curve mold, with the excess HEMA ring being secured to the front curve mold. Figures 4 to 13 are not part of the present invention.
Figure 4 shows a process step wherein a primary contact lens package has been dosed with a room temperature release solvent and is positioned over a microwave waveguide so that the release solvent is being heated by microwaves.
Figure 5 shows a process step and position wherein a conveyance device has lowered a lens/back curve mold assembly such that the lens is in intimate contact with and immersed in release solvent within the primary package which is being heated by microwaves.
Figure 6 shows a process step and position wherein sufficient microwave energy has been transferred so that release of the lens from the back curve mold is achieved, and the conveyance device has lifted the back curve mold from the primary package, leaving the lens in the primary package immersed in release solvent which is being heated by microwaves.
Figure 7 shows a continuation of the microwave heating process whereby continued lens hydration is facilitated by continued microwave heating of the lens and release solvent within the primary package.
Figure 8 shows a process step wherein dirty release and extraction solvent is being expelled from the lens/primary package, and clean extraction solvent is being added to the lens/primary package.
Figure 9 shows a process step wherein the lens hydration process is being facilitated by continued microwave heating.
Figure 10 illustrates a further processing step wherein a DI removal nozzle is positioned over the primary package/contact lens, and compressed air enters through a central passage and displaces the extraction solvent through evacuation passages in the DI removal nozzle.
Figure 11 illustrates a further processing step wherein a dosing tube transfers a metered quantity of DI rinse solvent into the primary package/contact lens.
Figure 12 illustrates a further processing step, similar to the processing step of Figure 10, wherein the final rinse solvent is being displaced and evacuated by compressed air.
Figure 13 illustrates a further processing step, similar to the processing step of Figure 11, wherein a metered quantity of DI rinse solvent is dosed into the primary package/contact lens, which is now ready for the application a package cover/seal thereover.

### DETAILED DESCRIPTION OF THE INVENTION

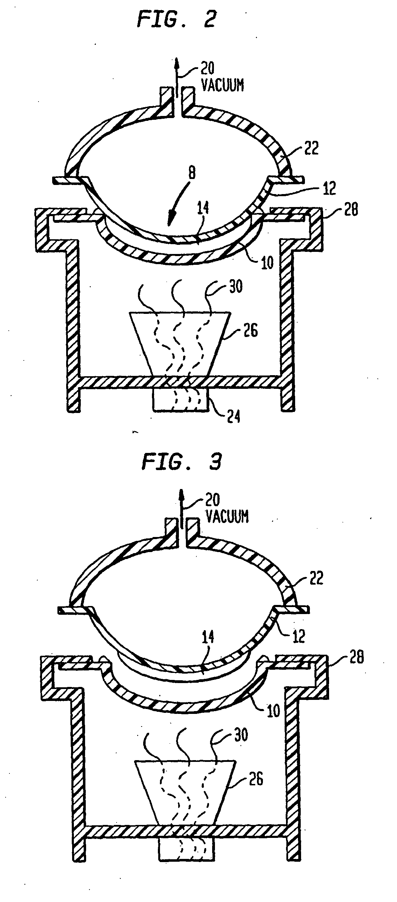

Figure 2 illustrates a contact lens/mold assembly 8 of a front curve mold and a base curve mold after a hydrogel soft contact lens has been molded therein, in a manner as has been explained with reference to Figure 1. The contact lens/mold assembly 8 is supported by a vacuum 20 operated conveyor device 22 which secures the back curve mold 12 thereto by a vacuum.

The lens/mold assembly 8 is positioned in a microwave heating and processing demolding station which includes a microwave generator 24, a microwave waveguide 26, and possibly a microwave valve. The microwave waveguide 26 can be produced from low cost sheet metal, with the expense being in its design. A waveguide can be virtually 100% efficient at containing and directing microwaves, and further is not subject to accelerated corrosion by the various release, rinse and DI solutions used during the practice of the present invention. The lens/mold assembly is positioned in relation to the microwave waveguide and heating apparatus such that the contact lens and its interface with the surface of the front curve mold of the lens/mold assembly can be preferentially heated by microwaves.

The demold process can be promoted and achieved by a differential thermal expansion between the contact lens material and the demold material. This may occur by differences in thermal conductivity and conduction, or by differences in absorption of microwave energy between the contact lens and the mold.

The process of demolding a contact lens from a mold assembly 8, which includes a front curve mold 10 and a base curve mold 12 with a contact lens 14 molded therebetween, can be facilitated by producing a thermal gradient between the contact lens and the front or base curve mold which is to be demolded or separated from the contact lens. The mold assembly can be designed to first separate or demold the front curve mold from the base curve mold and the contact lens which remain adhered together, which is the process illustrated herein, or to first separate the base curve mold from the front curve mold and the contact lens which remain adhered together.

In this patent application, the curve mold which retains the contact lens adhered thereto after the demolding/separating process is referred to as the adhere curve mold, and the other curve mold which is demolded and separated from the adhere curve mold and contact lens is referred to as the demold curve mold. The microwave heating can generate a thermal expansion differential between the contact lens and the demold curve mold with the thermal expansion differential resulting in reduced adhesion between the contact lens and the demold curve mold.

Typically, the separated demold curve mold is designed to adhere and retain an excess HEMA ring which is removed therewith, leaving the contact lens adhered to the other adhere curve mold.

A thermal gradient between the contact lens and the demolded or separated curve mold can be produced by microwaves by designing the contact lens to absorb more microwaves than the mold. The ability of a material to absorb microwaves depends, among other factors, on the material having dipolar molecules, such as water, which are vibrated and heated by microwaves. The curve molds can typically fabricated from polystyrene, which is not a dipolar material, and so is virtually invisible to and not heated by microwaves. Accordingly, the molded contact lens can be molded of a material having dipolar molecules, such that the contact lens is heated by microwaves, while the polystyrene curve molds are not heated by microwaves, to create the desired thermal gradient between the contact lens and the demolded curve mold.

Figure 2 illustrates a view wherein a conveyor device 22 has positioned a cured lens/mold assembly over the microwave waveguide 24 in a position in which the front curve mold is held and secured in place by a front curve mold and HEMA ring hold-down device 28 so that the contact lens, and more particularly the interface between the contact lens and the front curve lens surface can be preferentially heated by microwaves 30 to loosen the adhesion of the front curve mold to the molded contact lens. The assembly conveyor device 22 and back curve mold 12 are then retracted and lifted vertically while the front curve mold 10 is restrained by the hold-down device 28. This causes the back curve mold and adhered contact lens to separate from the front curve mold, with the excess HEMA ring remaining adhered to the front curve mold, which is designed to promote such adherence.

Figure 3 shows a process step and position in which the cured lens/back curve mold are demolded and disassembled from the front curve mold, with the excess HEMA ring remaining secured to the front curve mold. The front curve mold is then removed from the demold or disassembly processing station, as by a front curve vacuum conveyance device.

At each microwave heating station, it is preferable that the microwave generator be maintained on continuously to maximize the life of the microwave generator, such that a microwave valve might be utilized, or alternatively the microwaves can be redirected to perform another heating chore when a microwave processing station does not require microwave heating, such as during periods of transport of mold assemblies or mold components or primary packages, or dosing or fluid change periods.

Moreover the processes of the present invention can be performed on a continuous or semi-continuous production line, and can be performed on a single mold assembly or contact lens or a plurality of mold assemblies or contact lenses positioned in a pallet holding an array of those assemblies or contact lenses, or can be performed on small lots, such as several hundred, of mold assemblies or contact lenses.

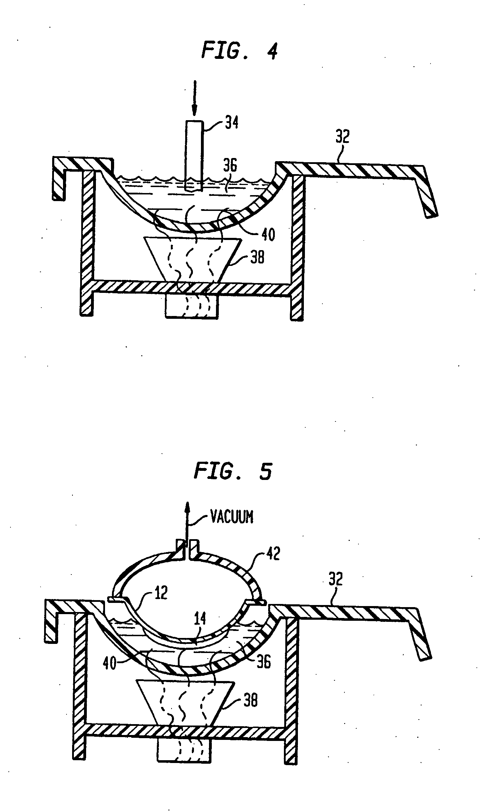

Figure 4 illustrates a process step wherein a primary package base 32 is positioned in a release processing station, as by a primary package vacuum conveyor device. The primary package 32 is dosed through a dosing tube 34 with a metered quantity of release solvent 36, preferably at ambient or room temperature. The primary package and release solvent are positioned over a microwave waveguide 38 so that the release solvent can be heated by microwaves 40. Another advantage to a microwave system is that a microwave system allows hydration to be performed in the primary package.

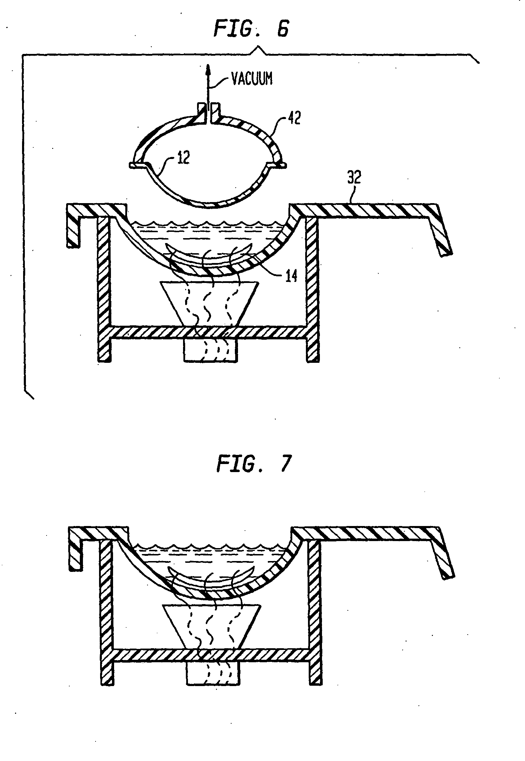

Figure 5 shows a process step and position wherein a conveyor device 42 has lowered and positioned a lens/back curve mold 14, 12 such that the lens 14 is in intimate contact with and entirely immersed and submerged in the heated release solvent 36 within the primary package, release solvent, and the release solvent and also possibly the contact lens are being heated by microwaves. If the contact lens is heated by microwaves and the base curve mold is not, a thermal gradient is created therebetween to promote release of the contact lens from the base curve mold, such that the base curve mold can then be removed from the station, as illustrated in Figure 6.

Figure 6 shows a process step and position wherein sufficient microwave energy has been transferred such that release of the contact lens from the back curve mold has been achieved. Figure 6 also shows a position wherein the conveyor device 42 has lifted the back curve mold 12 from the primary package, leaving the lens 14 immersed in release solvent in the primary package 32.

Figure 7 shows a continuation of the microwave heating process whereby continued lens hydration is facilitated by continued microwave heating of the lens and release solvent within the primary package, and wherein the lens is now positioned in the primary package immersed in dirty release solvent.

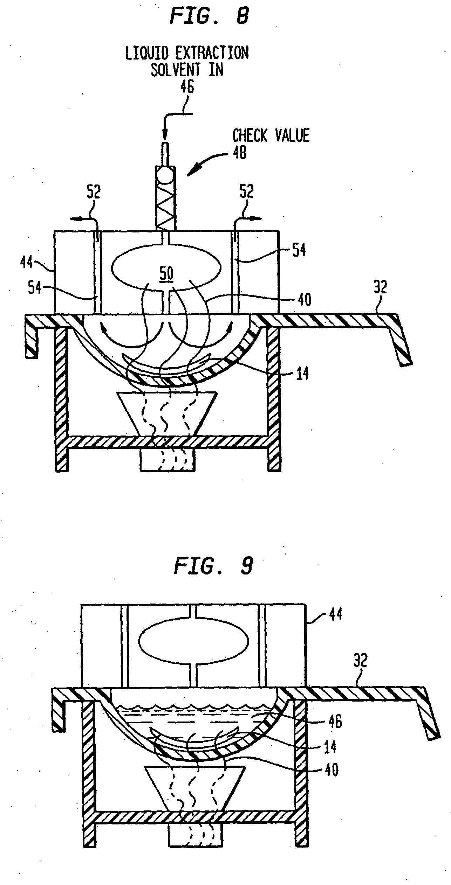

Figure 8 shows a process step wherein a specialized distilled water (DI) removal and vaporization nozzle 44 is positioned over the primary package. Liquid rinse extraction solvent 46 flows through a check valve 48 into a vaporization chamber 50, where it is vaporized by applied microwaves 40, generating pressure to force the vaporized solvent out the bottom into the primary package 32. A vacuum 52 is also applied to extraction passageways 54, such that the dirty release and extraction solvent is displaced and expelled from the lens/primary package by the high pressure and high velocity rinse extraction solvent vapor, and clean rinse extraction solvent 46 is added to the lens/primary package, with continued additional heating by microwaves facilitating further hydration.

Figure 9 shows the resulting system wherein the lens 14 is entirely immersed in condensed rinse extraction solvent 46, after which a sufficient time is allowed for passive diffusion of undesirable materials and molecules from the lens. This lens hydration process can be facilitated by continued microwave 40 heating. The microwave heating system has the ability to raise the temperature of the rinse extraction solvent to exceed the normal boiling point of the rinse extraction solvent to further enhance lens hydration by continued microwave heating.

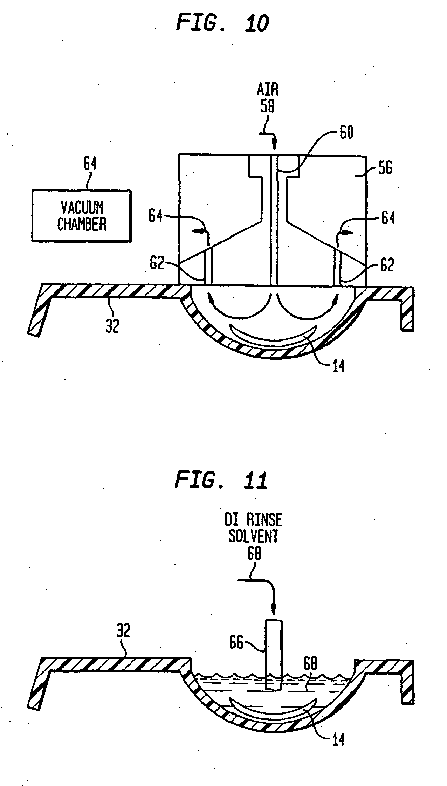

Figure 10 illustrates a further processing step wherein a DI removal nozzle 56 is positioned over the primary package/contact lens 32, 14, and compressed air 58 enters through a central passage 60 in the DI removal nozzle, and displaces the now dirty rinse extraction solvent 46 through evacuation passages 62 in the DI removal nozzle which have a vacuum 64 applied thereto.

Figure 11 illustrates a further processing step wherein a dosing tube 66 transfers a metered quantity of fresh DI rinse extraction solvent 68 into the primary package/contact lens 32, 14.

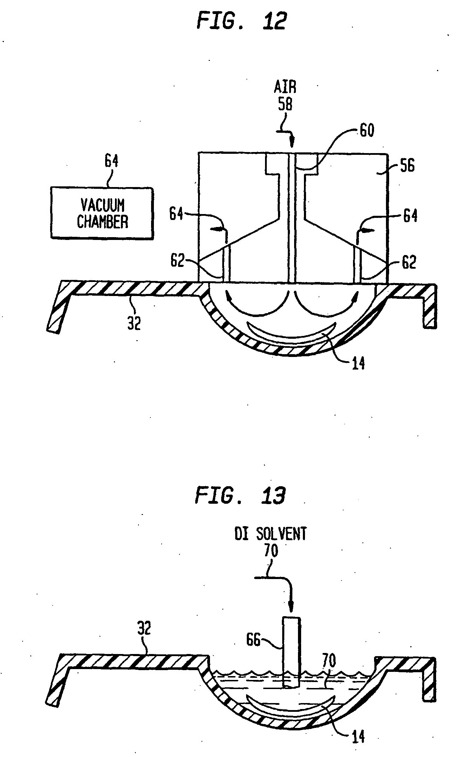

Figure 12 illustrates a further processing step, similar to the processing step of Figure 10, wherein, after a period of hydration time, the now dirty DI rinse extraction solvent 68 is being displaced and evacuated by compressed air 58. A DI removal nozzle 58 is positioned over the primary package/contact lens 32, 14, and compressed air 58 enters through a central passage 60 in the DI removal nozzle, and displaces the now dirty rinse extraction solvent 68 through evacuation passages 62 in the DI removal nozzle which have a vacuum 64 applied thereto.

Figure 13 illustrates a further processing step, similar to the processing step of Figure 11, wherein a metered quantity of fresh DI rinse extraction solvent 70 is dosed through tube 66 into the primary package/contact lens 32, 14, which is now ready for the application a package cover/seal thereover. The primary package with the lens and solvent therein can be removed from the microwave heating and processing station to complete further packaging and processing of the product.

## Claims

1. A process for demolding a contact lens from a lens/mold assembly (8), which includes a front curve mold (10) and a base curve mold (12) with a contact lens (14) molded therebetween, comprising:
positioning the lens/mold assembly (8) in relation to microwave radiation generated by a microwave generator (24) such that the contact lens (14) and its interface with a surface of a demold curve mold of the lens/mold assembly (8) is heated by microwaves, wherein the contact lens is molded of a material having dipolar molecules, such that the contact lens is heated by microwaves, while the demold curve mold does not have dipolar molecules, such that it is not heated by microwaves, such that a thermal gradient is produced between the contact lens and the demold curve mold by microwaves to generate a thermal expansion differential between the contact lens and the demold curve mold, with the thermal expansion differential resulting in reduced adhesion between the contact lens and the demold curve mold to facilitate the demolding process; and
positioning the demold curve mold in a hold down device (28) while separating and demolding the demold curve mold from the remaining adhered curve mold which has the contact lens adhered thereto.

2. The process of claim 1, wherein the demold curve mold is the front curve mold (10), and a thermal gradient is produced between the contact lens (14) and the front curve mold (10), which is demolded and separated from the adhered base curve mold (12) and the contact lens (14).

## Patentansprüche

1. Verfahren zum Entformen einer Kontaktlinse aus einer Linse/Form-Anordnung (8), welche eine Form (10) für die vordere Krümmung und eine Form (12) für die Basiskrümmung umfasst, wobei eine Kontaktlinse (14) zwischen diesen geformt wird, das aufweist:
Positionieren der Linse/Form-Anordnung (8) in relativer Lage zu Mikrowellenstrahlung, die von einem Mikrowellengenerator (24) erzeugt wird, so dass die Kontaktlinse (14) und ihre Grenzfläche zu einer Oberfläche einer zu entformenden Krümmungsform der Linse/Form-Anordnung (8) durch Mikrowellen beheizt wird, wobei die Kontaktlinse aus einem Material mit bipolaren Molekülen geformt wird, so dass die Kontaktlinse durch Mikrowellen erwärmt wird, während die zu entformende Krümmungsform keine bipolaren Moleküle hat, so dass sie nicht von Mikrowellen erwärmt wird, so dass ein thermischer Gradient zwischen der Kontaktlinse und der zu entformenden Krümmungsform durch Mikrowellen erzeugt wird, um eine Differenz in der thermischen Ausdehnung zwischen der Kontaktlinse und der zu entformenden Krümmungsform zu erzeugen, wobei die Differenz in der thermischen Ausdehnung zu einem verringerten Anhaften zwischen der Kontaktlinse und der zu entformenden Krümmungsform führt, um den Entformprozess zu vereinfachen; und
Positionieren der zu entformenden Krümmungsform in einer Niederhalteeinrichtung (28), während die zu entformende Krümmungsform von der verbleibenden anhaftenden Krümmungsform, an der die Kontaktlinse anhaftet, entformt und getrennt wird.

2. Verfahren nach Anspruch 1, bei dem die zu entformende Krümmungsform die Form (10) für die vordere Krümmung ist und ein thermischer Gradient zwischen der Kontaktlinse (14) und der Form (10) für die vordere Krümmung erzeugt wird, die von der anhaftenden Form (12) für die Basiskrümmung und der Kontaktlinse (14) entformt und getrennt wird.

## Revendications

1. Procédé de démoulage d'une lentille de contact d'un ensemble lentille/moule (8), qui comprend un moule à courbure avant (10) et un moule à courbure de base (12) avec une lentille de contact (14) moulée entre les deux, consistant à :
◆ positionner l'ensemble lentille/moule (8) par rapport au rayonnement généré par un générateur à micro-ondes (24), de telle sorte que la lentille de contact (14) et son interface avec une surface d'un moule à courbure de démoulage de l'ensemble lentille/moule (8) soient chauffées par des micro-ondes, dans lequel la lentille de contact est moulée à partir d'un matériau présentant des molécules dipolaires, de sorte que la lentille de contact soit chauffée par des micro-ondes, tandis que le moule à courbure de démoulage ne présente pas de molécules dipolaires, de sorte qu'il ne soit pas chauffé par des micro-ondes, afin qu'un gradient thermique soit produit entre la lentille de contact et le moule à courbure de démoulage par des micro-ondes, de manière à générer un différentiel d'expansion thermique entre la lentille de contact et le moule à courbure de démoulage, le différentiel d'expansion thermique se traduisant par une adhérence réduite entre la lentille de contact et le moule à courbure de démoulage afin de faciliter le processus de démoulage ; et
◆ positionner le moule à courbure de démoulage dans un dispositif de retenue (28) tout en séparant et démoulant le moule à courbure de démoulage du moule à courbure adhésif restant sur lequel adhère la lentille de contact.

2. Procédé selon la revendication 1, dans lequel le moule à courbure de démoulage est le moule à courbure avant (10), et un gradient thermique est produit entre la lentille de contact (14) et le moule à courbure avant (10), qui est démoulé et séparé du moule à courbure de base adhésif (12) et de la lentille de contact (14).
